# EUROPEAN PATENT SPECIFICATION

(11) **EP 2 820 104 B1**
(45) Date of publication and mention of the grant of the patent: **30.11.2016**
(21) Application number: 13729871.7
(22) Date of filing: 04.06.2013
(51) Int. Cl.: C09K 8/68, C04B 28/02, C09K 8/467

(54) **SELF-DEGRADING IONICALLY CROSS-LINKED BIOPOLYMER COMPOSITION FOR WELL TREATMENT**
SELBSTABBAUENDE IONISCH VERNETZTE BIOPOLYMERZUSAMMENSETZUNG ZUR BEHANDLUNG VON BOHRLÖCHERN
COMPOSITION DE BIOPOLYMÈRE RÉTICULÉ IONIQUEMENT SE RÉSORBANT AUTOMATIQUEMENT POUR LE TRAITEMENT DES PUITS

(30) Priority: 19.06.2012 US 201213527478
(43) Date of publication of application: 07.01.2015
(73) Proprietor: Halliburton Energy Services, Inc., Houston, TX 77072 (US)
(72) Inventor: RINCON-TORRES, Marco Tulio, Aberdeen Aberdeenshire AB210GN (GB)
(74) Representative: Hoffmann Eitle
(86) International application number: PCT/US2013/043982
(87) International publication number: WO 2013/191890

(56) References cited:
- EP-A2- 0 805 260
- US-A- 3 079 332
- US-A- 3 613 790
- US-A1- 2010 179 076

## Description

### TECHNICAL FIELD

The inventions are in the field of producing crude oil or natural gas from subterranean formations. More specifically, the inventions generally relate to methods of breaking the viscosity of an aqueous treatment fluid in a well.

### BACKGROUND

### Oil & Gas Wells

In the context of production from a well, oil and gas are understood to refer to crude oil and natural gas. Oil and gas are naturally occurring hydrocarbons in certain subterranean formations.

A subterranean formation containing oil or gas may be located under land or under the seabed off shore. Oil and gas reservoirs are typically located in the range of a few hundred feet (shallow reservoirs) to a few tens of thousands of feet (ultra-deep reservoirs) below the surface of the land or seabed.

To produce oil or gas, a well is drilled into a subterranean formation that is an oil or gas reservoir. Typically, a well must be drilled hundreds or thousands of feet into the earth to reach an oil or gas reservoir. Generally, the greater the depth of the formation, the higher the static temperature and pressure of the formation.

### Well Servicing and Well Fluids

To produce oil or gas, a well is drilled into a subterranean formation that is an oil or gas reservoir.

Generally, well services include a wide variety of operations that may be performed in oil, gas, geothermal, or water wells, such as drilling, cementing, completion, and intervention. Well services are designed to facilitate or enhance the production of desirable fluids such as oil or gas from or through a subterranean formation. A well service usually involves introducing a well fluid into a well.

### Common Well Treatments and Treatment Fluids

Drilling, completion, and intervention operations can include various types of treatments that are commonly performed in a wellbore or subterranean formation.

For example, a treatment for fluid-loss control can be used during any of drilling, completion, and intervention operations. During completion or intervention, stimulation is a type of treatment performed to enhance or restore the productivity of oil and gas from a well. Stimulation treatments fall into two main groups: hydraulic fracturing and matrix treatments. Fracturing treatments are performed above the fracture pressure of the subterranean formation to create or extend a highly permeable flow path between the formation and the wellbore. Matrix treatments are performed below the fracture pressure of the formation. Other types of completion or intervention treatments can include, for example, gravel packing, consolidation, and controlling excessive water production. Still other types of completion or intervention treatments include, but are not limited to, damage removal, formation isolation, wellbore cleanout, scale removal, and scale control. Of course, other well treatments and treatment fluids are known in the art.

### Kill Pill Treatments

To kill a well describes various methods to stop flow from a well. A kill pill is a treatment fluid with a density at least sufficient so that a full column of the fluid would control the well and prevent fluid entry into the wellbore from any exposed formation. A kill weight fluid has a sufficient density such that the column height of the fluid in the wellbore creates an overbalance of the pressure of the formation. Kill-pills are often used during and after perforating a well during completion or intervention.

Kill-pills can be water-based or oil-based. A typical water-based kill-pill may consist of a brine that meets density requirements and one or more of the following: a xanthan polymer for viscosity control, an insoluble starch polymer for fluid loss control, and sized calcium carbonate for bridging at the pore throats. A typical oil-based kill-pill may consist of base oil, brine as an internal phase, an emulsifier package, barite or sized calcium carbonate to meet density and bridging requirements, lime and organophilic clay for alkalinity and viscosity, respectively. In addition, fluid-loss control additives are also added in oil-based muds.

### Hydraulic Fracturing

Hydraulic fracturing is a common stimulation treatment. The purpose of a fracturing treatment is to provide an improved flow path for oil or gas to flow from the hydrocarbon-bearing formation to the wellbore. A treatment fluid adapted for this purpose is sometimes referred to as a fracturing fluid. The fracturing fluid is pumped at a sufficiently high flow rate and pressure into the wellbore and into the subterranean formation to create or enhance one or more fractures in the subterranean formation.

A newly-created or newly-extended fracture will tend to close together after the pumping of the fracturing fluid is stopped. To prevent the fracture from closing, a material is usually placed in the fracture to keep the fracture propped open and to provide higher fluid conductivity than the matrix of the formation. A material used for this purpose is referred to as a proppant.

A proppant is in the form of a solid particulate, which can be suspended in the fracturing fluid, carried downhole, and deposited in the fracture to form a proppant pack. The proppant pack props the fracture in an open condition while allowing fluid flow through the permeability of the pack. The proppant pack in the fracture provides a higher-permeability flow path for the oil or gas to reach the wellbore compared to the permeability of the matrix of the surrounding subterranean formation. This higher-permeability flow path increases oil and gas production from the subterranean formation.

A particulate for use as a proppant is usually selected based on the characteristics of size range, crush strength, and solid stability in the types of fluids that are encountered or used in wells. Preferably, a proppant should not melt, dissolve, or otherwise degrade from the solid state under the downhole conditions.

### Gravel Packing

Gravel packing is commonly used as a sand-control method to prevent production of formation sand or other fines from a poorly consolidated subterranean formation. In this context, "fines" are tiny particles, typically having a diameter of 43 microns or smaller, that have a tendency to flow through the formation with the production of hydrocarbon. The fines have a tendency to plug small pore spaces in the formation and block the flow of oil. As all the hydrocarbon is flowing from a relatively large region around the wellbore toward a relatively small area around the wellbore, the fines have a tendency to become densely packed and screen out or plug the area immediately around the wellbore. Moreover, the fines are highly abrasive and can be damaging to pumping and oilfield other equipment and operations.

Placing a relatively larger particulate near the wellbore helps filter out the sand or fine particles and prevents them from flowing into the well with the produced fluids. The primary objective is to stabilize the formation while causing minimal impairment to well productivity.

The particulate used for this purpose is referred to as "gravel." In the oil and gas field, and as used herein, the term "gravel" is refers to relatively large particles in the sand size classification, that is, particles ranging in diameter from about 0.1 mm up to about 2 mm. Generally, a particulate having the properties, including chemical stability, of a low-strength proppant is used in gravel packing. An example of a commonly used gravel packing material is sand having an appropriate particulate size range.

In one common type of gravel packing, a mechanical screen is placed in the wellbore and the surrounding annulus is packed with a particulate of a larger specific size designed to prevent the passage of formation sand or other fines. It is also common, for example, to gravel pack after a fracturing procedure, and such a combined procedure is sometimes referred to as a "frac-packing."

### Fluid-Loss Control

Fluid loss refers to the undesirable leakage of a fluid phase of any type of well fluid into the permeable matrix of a zone, which zone may or may not be a treatment zone. Fluid-loss control refers to treatments designed to reduce such undesirable leakage. Providing effective fluid-loss control for well fluids during certain stages of well operations is usually highly desirable.

The usual approach to fluid-loss control is to substantially reduce the permeability of the matrix of the zone with a fluid-loss control material that blocks the permeability at or near the face of the rock matrix of the zone. For example, the fluid-loss control material may be a particulate that has a size selected to bridge and plug the pore throats of the matrix. All else being equal, the higher the concentration of the particulate, the faster bridging will occur. As the fluid phase carrying the fluid-loss control material leaks into the formation, the fluid-loss control material bridges the pore throats of the matrix of the formation and builds up on the surface of the borehole or fracture face or penetrates only a little into the matrix. The buildup of solid particulate or other fluid-loss control material on the walls of a wellbore or a fracture is referred to as a filter cake. Depending on the nature of a fluid phase and the filter cake, such a filter cake may help block the further loss of a fluid phase (referred to as a filtrate) into the subterranean formation. A fluid-loss control material is specifically designed to lower the volume of a filtrate that passes through a filter medium.

After application of a filter cake, however, it may be desirable to restore permeability into the formation. If the formation permeability of the desired producing zone is not restored, production levels from the formation can be significantly lower. Any filter cake or any solid or polymer filtration into the matrix of the zone resulting from a fluid-loss control treatment must be removed to restore the formation's permeability, preferably to at least its original level. This is often referred to as clean up.

A variety of fluid-loss control materials have been used and evaluated for fluid-loss control and clean-up, including foams, oil-soluble resins, acid-soluble solid particulates, graded salt slurries, linear viscoelastic polymers, and heavy metal-crosslinked polymers. Their respective comparative effects are well documented.

Fluid-loss control materials are sometimes used in drilling fluids or in treatments that have been developed to control fluid loss. A fluid-loss control pill is a treatment fluid that is designed or used to provide some degree of fluid-loss control. Through a combination of viscosity, solids bridging, and cake buildup on the porous rock, these pills oftentimes are able to substantially reduce the permeability of a zone of the subterranean formation to fluid loss. They also generally enhance filter-cake buildup on the face of the formation to inhibit fluid flow into the formation from the wellbore.

### Increasing Viscosity of a Well Fluid

Increasing the viscosity of a well fluid can be useful for several purposes.

For example, during drilling, rock cuttings should be carried uphole by the drilling fluid and flowed out of the wellbore. The rock cuttings typically have specific gravity greater than 2, which is much higher than that of many drilling fluids. These high-density cuttings have a tendency to separate from water or oil very rapidly.

Similarly, a proppant used in fracturing or a gravel used in gravel packing may have a much different density than the carrier fluid. For example, sand has a specific gravity of about 2.7, whereas water has a specific gravity of 1.0 at Standard Laboratory conditions of temperature and pressure. A proppant or gravel having a different density than water will tend to separate from water very rapidly.

As many well fluids are water-based, partly for the purpose of helping to suspend particulate of higher density, and for other reasons known in the art, the density of the fluid used in a well can be increased by including highly water-soluble salts in the water, such as potassium chloride. However, increasing the density of a well fluid will rarely be sufficient or effective to match the density of the particulate.

### Viscosity-Increasing Agent

A viscosity-increasing agent can be used to increase the ability of a fluid to suspend and carry a particulate material in a well fluid. A viscosity-increasing agent can be used for other purposes, such as matrix diversion, conformance control, or friction reduction.

A viscosity-increasing agent is sometimes referred to in the art as a viscosifying agent, viscosifier, thickener, gelling agent, or suspending agent. In general, any of these refers to an agent that includes at least the characteristic of increasing the viscosity of a fluid in which it is dispersed or dissolved. There are several kinds of viscosity-increasing agents and related techniques for increasing the viscosity of a fluid.

In general, because of the high volume of fracturing fluid typically used in a fracturing operation, it is desirable to efficiently increase the viscosity of fracturing fluids to the desired viscosity using as little viscosity-increasing agent as possible. In addition, relatively inexpensive materials are preferred. Being able to use only a small concentration of the viscosity-increasing agent requires a lesser amount of the viscosity-increasing agent in order to achieve the desired fluid viscosity in a large volume of fracturing fluid.

### Polymers for Increasing Viscosity

Certain kinds of polymers can be used to increase the viscosity of a fluid. In general, the purpose of using a polymer is to increase the ability of the fluid to suspend and carry a particulate material. Polymers for increasing the viscosity of a fluid are preferably soluble in the external phase of a fluid. Polymers for increasing the viscosity of a fluid can be naturally occurring polymers such as polysaccharides, derivatives of naturally occurring polymers, or synthetic polymers.

Treatment fluids used in high volumes, such as fracturing fluids, are usually water-based. Efficient and inexpensive viscosity-increasing agents for water include certain classes of water-soluble polymers.

As will be appreciated by a person of skill in the art, the dispersibility or solubility in water of a certain kind of polymeric material may be dependent on the salinity or pH of the water. Accordingly, the salinity or pH of the water can be modified to facilitate the dispersibility or solubility of the water-soluble polymer. In some cases, the water-soluble polymer can be mixed with a surfactant to facilitate its dispersibility or solubility in the water or salt solution utilized.

The water-soluble polymer can have an average molecular weight in the range of from about 50,000 to 20,000,000, most preferably from about 100,000 to about 4,000,000. For example, guar polymer is believed to have a molecular weight in the range of about 2 to about 4 million.

Typical water-soluble polymers used in well treatments include water-soluble polysaccharides and water-soluble synthetic polymers (*e.g*., polyacrylamide). The most common water-soluble polysaccharides employed in well treatments are guar and its derivatives.

As used herein, a "polysaccharide" can broadly include a modified or derivative polysaccharide. As used herein, "modified" or "derivative" means a compound or substance formed by a chemical process from a parent compound or substance, wherein the chemical backbone skeleton of the parent is retained in the derivative. The chemical process preferably includes at most a few chemical reaction steps, and more preferably only one or two chemical reaction steps. As used herein, a "chemical reaction step" is a chemical reaction between two chemical reactant species to produce at least one chemically different species from the reactants (regardless of the number of transient chemical species that may be formed during the reaction). An example of a chemical step is a substitution reaction. Substitution on a polymeric material may be partial or complete.

A guar derivative can be selected from the group consisting of, for example, a carboxyalkyl derivative of guar, a hydroxyalkyl derivative of guar, and any combination thereof. Preferably, the guar derivative is selected from the group consisting of carboxymethylguar, carboxymethylhydroxyethylguar, hydroxyethylguar, carboxymethylhydroxypropylguar, ethylcarboxymethylguar, and hydroxypropylmethylguar.

### Form and Concentration of Viscosity Increasing Agent

The viscosity-increasing agent can be provided in any form that is suitable for the particular treatment fluid or application. For example, the viscosity-increasing agent can be provided as a liquid, gel, suspension, or solid additive that is admixed or incorporated into a treatment fluid.

If used, a viscosity-increasing agent may be present in the well fluids in a concentration in the range of from about 0.01% to about 5% by weight of the continuous phase therein.

The viscosity-increasing agent should be present in a treatment fluid in a form and in an amount at least sufficient to impart the desired viscosity to a treatment fluid. For example, the amount of viscosity-increasing agent used in the treatment fluids may vary from about 0.03 g/L (0.25 pounds per 1,000 gallons of treatment fluid ("lbs/Mgal")) to about 24 g/L (200 lbs/Mgal). In other embodiments, the amount of viscosity-increasing agent included in the treatment fluids may vary from about 1.2 g/L (10 lbs/Mgal) to about 9.6 g/L (80 lbs/Mgal). In another embodiment, about 20 pounds to about 70 pounds (lbs) of water-soluble polymer is used per 1,000 gallons (Mgal) of water (equivalent to about 2.4 g/L to about 8.4 g/L).

### Crosslinking of Polymer to Increase Viscosity of a Fluid or Form a Gel

The viscosity of a fluid at a given concentration of viscosity-increasing agent can be greatly increased by crosslinking the viscosity-increasing agent. A crosslinking agent, sometimes referred to as a crosslinker, can be used for this purpose. A crosslinker interacts with at least two polymer molecules to form a "crosslink" between them.

If crosslinked to a sufficient extent, the polysaccharide may form a gel with water. Gel formation is based on a number of factors including the particular polymer and concentration thereof, the particular crosslinker and concentration thereof, the degree of crosslinking, temperature, and a variety of other factors known to those of ordinary skill in the art.

For example, one of the most common viscosity-increasing agents used in the oil and gas industry is guar. A mixture of guar dissolved in water forms a base gel, and a suitable crosslinking agent can be added to form a much more viscous fluid, which is then called a crosslinked fluid. The viscosity of base gels of guar is typically about 0.02 Pa·s s (20 cP) to about 0.05 Pa·s (50 cP). When a base gel is crosslinked, the viscosity is increased by 2 to 100 times depending on the temperature, the type of viscosity testing equipment and method, and the type of crosslinker used.

The degree of crosslinking depends on the type of viscosity-increasing polymer used, the type of crosslinker, concentrations, temperature of the fluid, etc. Shear is usually required to mix the base gel and the crosslinking agent. Thus, the actual number of crosslinks that are possible and that actually form also depends on the shear level of the system. The exact number of crosslink sites is not well known, but it could be as few as one to about ten per polymer molecule. The number of crosslinks is believed to significantly alter fluid viscosity.

For a polymeric viscosity-increasing agent, any crosslinking agent that is suitable for crosslinking the chosen monomers or polymers may be used.

Cross-linking agents typically comprise at least one metal ion that is capable of cross-linking the viscosity-increasing agent molecules.

Some crosslinking agents form substantially permanent crosslinks with viscosity-increasing polymer molecules. Such crosslinking agents include, for example, crosslinking agents of at least one metal ion that is capable of crosslinking gelling agent polymer molecules. Examples of such crosslinking agents include, but are not limited to, zirconium compounds (such as, for example, zirconium lactate, zirconium lactate triethanolamine, zirconium carbonate, zirconium acetylacetonate, zirconium maleate, zirconium citrate, zirconium oxychloride, and zirconium diisopropylamine lactate); titanium compounds (such as, for example, titanium lactate, titanium maleate, titanium citrate, titanium ammonium lactate, titanium triethanolamine, and titanium acetylacetonate); aluminum compounds (such as, for example, aluminum acetate, aluminum lactate, or aluminum citrate); antimony compounds; chromium compounds; iron compounds (such as, for example, iron chloride); copper compounds; zinc compounds; sodium aluminate; or a combination thereof.

Crosslinking agents can include a crosslinking agent composition that may produce delayed crosslinking of an aqueous solution of a crosslinkable organic polymer, as described in U.S. Patent No. 4,797,216. Crosslinking agents can include a crosslinking agent composition that may include a zirconium compound having a valence of +4, an alpha-hydroxy acid, and an amine compound as described in U.S. Patent No. 4,460,751.

Some crosslinking agents do not form substantially permanent crosslinks, but rather chemically labile crosslinks with viscosity-increasing polymer molecules. For example, a guar that has been crosslinked with a borate-based crosslinking agent does not form permanent cross-links.

Where present, the cross-linking agent generally should be included in the fluids in an amount sufficient, among other things, to provide the desired degree of cross linking. In some embodiments, the cross-linking agent may be present in the treatment fluids in an amount in the range of from about 0.01% to about 5% by weight of the treatment fluid.

Buffering compounds may be used if desired, e.g., to delay or control the cross linking reaction. These may include glycolic acid, carbonates, bicarbonates, acetates, phosphates, and any other suitable buffering agent.

### Borate Cross-Linking

Borates have the chemical formula B(OR)₃, where B = boron, O = oxygen, and R = hydrogen or any organic group. At higher pH ranges, e.g., 8 or above, a borate is capable of increasing the viscosity of an aqueous solution of a water-soluble polymeric material such as a galactomannan or a polyvinyl alcohol. Afterwards, if the pH is lowered, e.g., below 8, the observed effect on increasing the viscosity of the solution can be reversed to reduce or "break" the viscosity back toward its original lower viscosity. It is also well known that, at lower pH ranges, e.g., below 8, borate does not increase the viscosity of such a water-soluble polymeric material. This effect of borate and response to pH provides a commonly used technique for controlling the cross-linking of certain polymeric viscosity-increasing agents. The control of increasing the viscosity of such fluids and the subsequent "breaking" of the viscosity tends to be sensitive to several factors, including the particular borate concentration in the solution.

Without being limited by any particular theoretical explanation, a borate is believed to be capable of forming labile bonds with two alcohol sites of other molecules. This ability of a borate to react with the alcohol sites can be employed to "cross-link" alcohol sites on different polymer molecules (or possibly other parts of the same molecule) that find their way in a solution to become adjacent to one another. The pH of an aqueous solution controls the equilibrium between boric acid and borate anion in solution. At higher pH ranges, the equilibrium shifts toward a higher concentration of borate ion in the water.

For example, by increasing the pH of a fluid to 8 or above, although usually in the range of about 8.5 - 12, a borate-releasing compound such as boric acid releases borate ions, which become available for cross-linking a water-soluble polymer having alcohol sites. By subsequently lowering the pH of the fluid to a pH of below 8, for example, by adding or releasing an acid into the fluid, the equilibrium shifts such that less of the borate anion species is in solution, and the cross-linking can be broken, thereby returning such a crosslinked fluid to a much lower viscosity.

Regardless of the theoretical chemical mechanism of borate cross-linking, which may not yet have been perfectly elucidated and understood, borates are widely used in the oil and gas industry to selectively control an increase and subsequent break in the viscosity of a water-based treatment fluid containing a water-soluble polymeric material having alcohol sites. A fluid having a viscosity greater than that of water can be useful in various well treatments, such as in fracturing a well where the increased viscosity is used to help carry a proppant through a wellbore to a desired location. After having served the intended purpose of a fluid having an increased viscosity, the viscosity of the fluid can be broken to help return the fluid back to the surface as some of the produced water. Therefore, borates are commonly found in produced water.

### Damage to Permeability

In well treatments using viscous well fluids, the material for increasing the viscosity of the fluid can damage the permeability of the proppant pack or the matrix of the subterranean formation. For example, a treatment fluid can include a polymeric material that is deposited in the fracture or within the matrix. By way of another example, the fluid may include surfactants that leave unbroken micelles in the fracture or change the wettability of the formation in the region of the fracture.

After application of a filter cake, it may be desirable to restore permeability into the formation. If the formation permeability of the desired producing zone is not restored, production levels from the formation can be significantly lower. Any filter cake or any solid or polymer filtration into the matrix of the zone resulting from a fluid-loss control treatment must be removed to restore the formation's permeability, preferably to at least its original level. This is often referred to as clean up.

The term "damage" as used herein refers to undesirable deposits in a subterranean formation that may reduce its permeability. Scale, skin, gel residue, and hydrates are contemplated by this term. Also contemplated by this term are geological deposits, such as, but not limited to, carbonates located on the pore throats of the sandstone in a subterranean formation.

### Breaker for Viscosity of Fluid or Filtercake

After a treatment fluid is placed where desired in the well and for the desired time, the fluid usually must be removed from the wellbore or the formation. For example, in the case of hydraulic fracturing, the fluid should be removed leaving the proppant in the fracture and without damaging the conductivity of the proppant bed. To accomplish this removal, the viscosity of the treatment fluid must be reduced to a very low viscosity, preferably near the viscosity of water, for optimal removal from the propped fracture. Similarly, when a viscosified fluid is used for gravel packing, the viscosified fluid must be removed from the gravel pack.

Reducing the viscosity of a viscosified treatment fluid is referred to as "breaking" the fluid. Chemicals used to reduce the viscosity of treatment fluids are called breakers. Other types of viscosified well fluids also need to be broken for removal from the wellbore or subterranean formation.

No particular mechanism is necessarily implied by the term. For example, a breaker can reduce the molecular weight of a water-soluble polymer by cutting the long polymer chain. As the length of the polymer chain is cut, the viscosity of the fluid is reduced. For instance, reducing the guar polymer molecular weight to shorter chains having a molecular weight of about 10,000 converts the fluid to near water-thin viscosity. This process can occur independently of any crosslinking bonds existing between polymer chains.

In the case of a crosslinked viscosity-increasing agent, for example, one way to diminish the viscosity is by breaking the crosslinks. For example, the borate crosslinks in a borate-crosslinked polymer can be broken by lowering the pH of the fluid. At a pH above 8, the borate ion exists and is available to crosslink and cause an increase in viscosity or gelling. At a lower pH, the borate ion reacts with proton and is not available for crosslinking, thus, an increase in viscosity due to borate crosslinking is reversible. In contrast, crosslinks formed by zirconium, titanium, antimony, and aluminum compounds, however, are such crosslinks are considered non-reversible and are broken by other methods than controlling pH.

Thus, removal of the treatment fluid is facilitated by using one or more breakers to reduce fluid viscosity.

Breakers must be selected to meet the needs of each situation. First, it is important to understand the general performance criteria of breakers. In reducing the viscosity of the treatment fluid to a near water-thin state, the breaker must maintain a critical balance. Premature reduction of viscosity during the pumping of a treatment fluid can jeopardize the treatment. Inadequate reduction of fluid viscosity after pumping can also reduce production if the required conductivity is not obtained.

A breaker should be selected based on its performance in the temperature, pH, time, and desired viscosity profile for each specific treatment.

In fracturing, for example, the ideal viscosity versus time profile would be if a fluid maintained 100% viscosity until the fracture closed on proppant and then immediately broke to a thin fluid. Some breaking inherently occurs during the 0.5 to 4 hours required to pump most fracturing treatments. One guideline for selecting an acceptable breaker design is that at least 50% of the fluid viscosity should be maintained at the end of the pumping time. This guideline may be adjusted according to job time, desired fracture length, and required fluid viscosity at reservoir temperature. A typical gravel pack break criteria is a minimum 4-hour break time.

Chemical breakers used to reduce viscosity of a well fluid viscosified with a viscosity-increasing agent or to help remove a filtercake formed with such a viscosity-increasing agent are generally grouped into three classes: oxidizers, enzymes, and acids.

US-A-3,079,332 discloses a drilling method employing an aqueous fluid which comprises an organic compound selected from guar gum and locust bean gum, a boron compound which supplies borate ions, an alkaline fluid to raise the pH of the fluid to above 8.0, and starch.

EP-A-0 805 260 discloses a method of controlling the delayed borate-crosslinking of a polysaccharide-based fracturing fluid, the method comprising adding a borate-releasing crosslinking agent and a delay agent to an alkaline fracturing fluid comprising a polysaccharide.

US-A-2010/0179076 teaches a method comprising the steps of combining a partitioning agent, a crosslinkable polymer such as guar, and a crosslinker, and introducing the fluid into a subterranean formation.

### SUMMARY OF THE INVENTION

A method of treating a well is provided, the method including the steps of: (A) forming a treatment fluid comprising: (i) water; (ii) a water-soluble β-polysaccharide, which is a β-galactomannan; (iii) a borate cross-linker; (iv) a base to adjust the pH of the water in the treatment fluid to be at least 8.5; and (v) a water-soluble α-polysaccharide comprising partially hydrolyzed starch; and (B) introducing the treatment fluid into the well.

### BRIEF DESCRIPTION OF THE DRAWING

The accompanying drawing is incorporated into the specification to help illustrate examples according to the presently most-preferred embodiment of the invention.

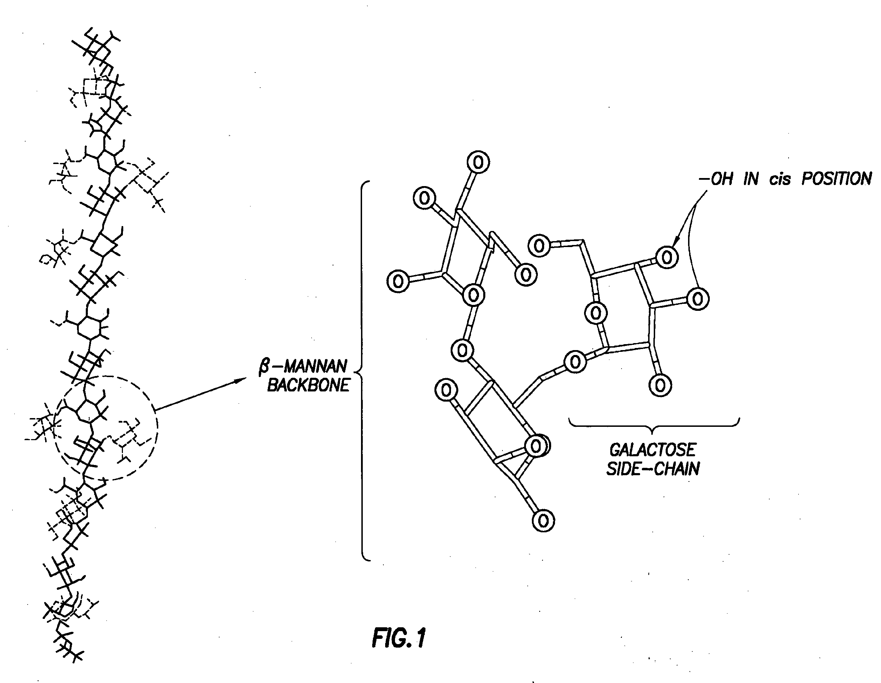

**Figure 1** shows the skeletal structure of β-galactomannan. The structure on the left side shows the linear polymer with the β-mannan backbone and galactose side-chain. The structure on the right side is a magnification of the encircled portion of the structure on the left side to show the cis position of hydroxyls in the galactose moiety, which is responsible for the coordinated ionic bonding with the cross-linker molecule.

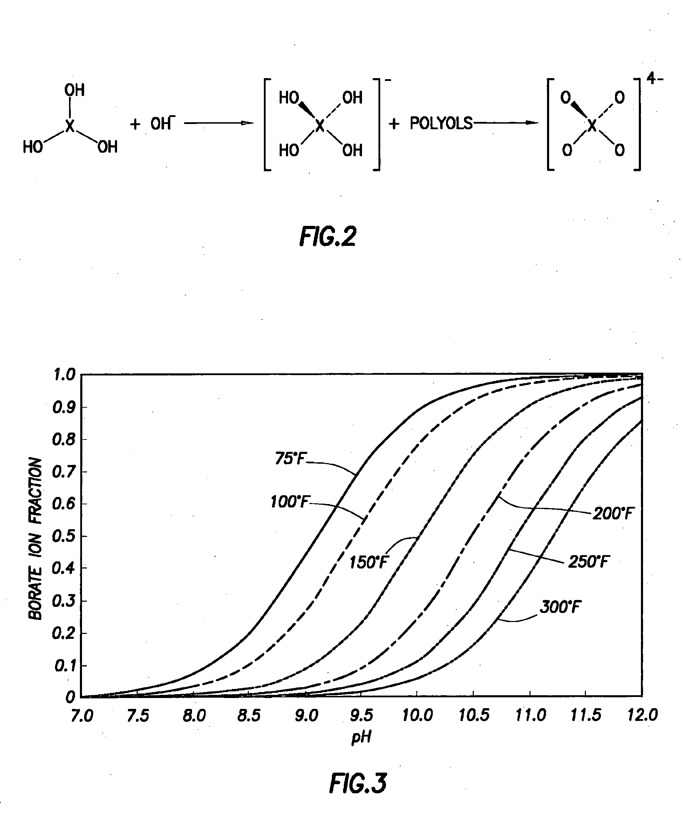

**Figure 2** shows the chemical equilibrium of the ionic cross-linker molecule in solution. At higher pH values (abundant OH⁻), the cross-linker adopts a tetra-dentate configuration that forms inter-molecular ionic bridges when polyol (e.g. sugars) are present.
**Figure 3** is a graph showing effect of the temperature and pH on the ionization of the borate cross-linker. **Figure 3** shows that a minimum pH of about 10.0 is required in order to have about 80% ionization of the cross-linker molecule at a temperature of 100 °F (37.7 °C). In addition, **Figure 3** shows that the higher the temperature, the higher the pH of the solution that is required to achieve a significant ionization of the cross-linker.

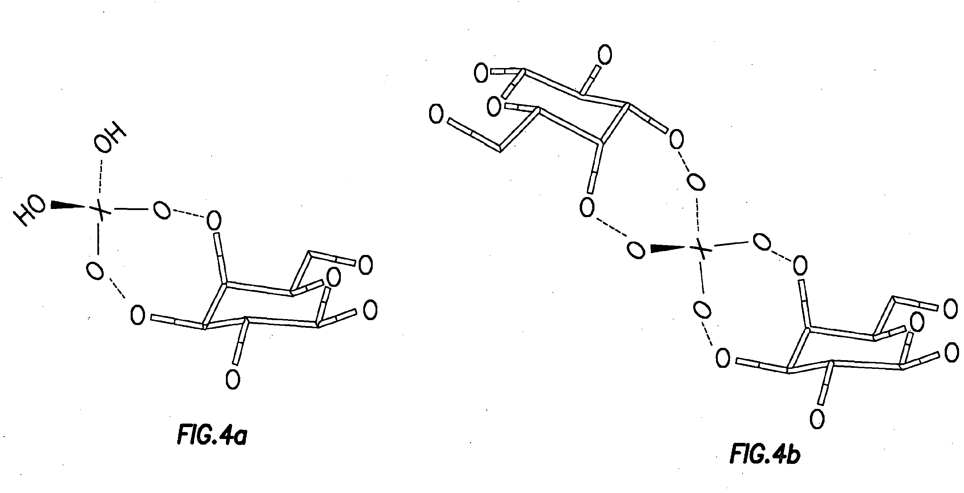

**Figures 4a** and **4b** are chemical skeletal structures showing the interactions of a borate cross-linker with the *cis*-diol of galactose. **Figure 4a** shows the structure of a 1:1 complex and **Figure 4b** shows the chemical structure of 1:2 complex that forms inter-molecular ionic bridges (cross-links) between galactose units of the galactomannan molecules. The 1:2 complex shown in **Figure 4b** is responsible for the increase in viscosity at higher pH values.

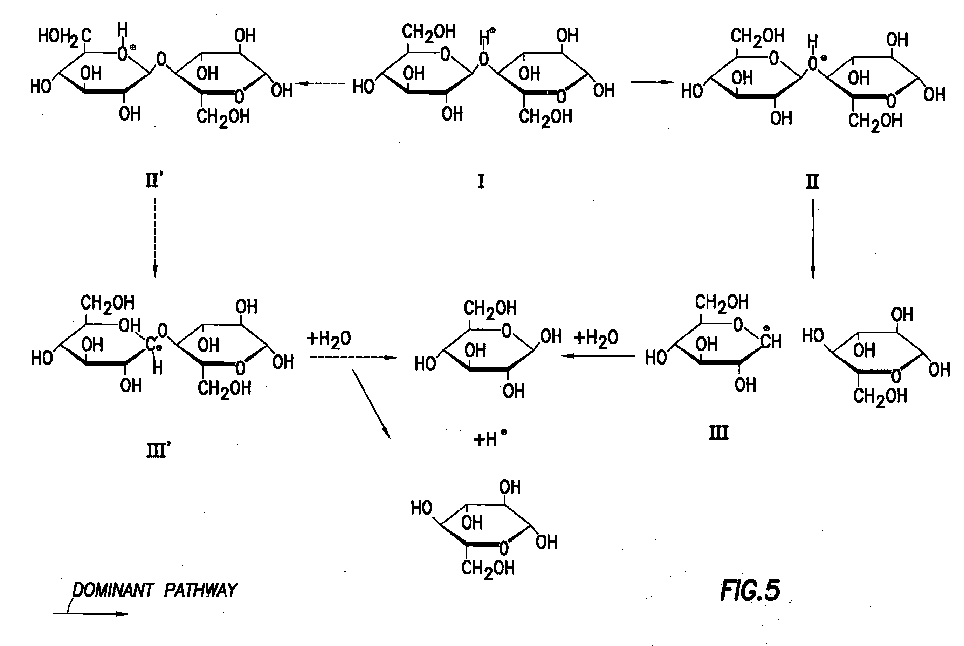

**Figure 5** is Diagram showing the mechanisms of acid hydrolysis of a β-(1,4) glucan (e.g., guar). The production of H⁺ is via hydrolysis pathway II'.

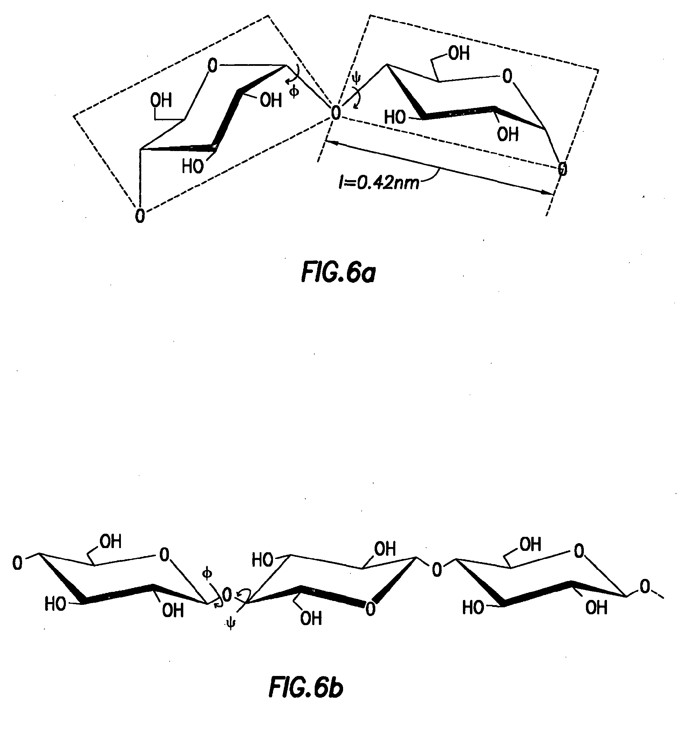

**Figures 6a** and **6b** are stereo images of glucose linked by α-(1,4)-O-glycosidic linkages (e.g., amylose) and β-(1,4)-O-glycosidic linkages (e.g., cellulose), respectively. Note that the overall configuration of the α-(1,4)-linked O-glycoside tends to adopt a helical configuration due to steric and geometric restrictions of the α-O-linkage, whereas the overall configuration of the β-(1,4)-linked O-glycoside tends to be linear. The α-linkages are, therefore, more unstable and prone to hydrolysis as compared to the β-linkages.

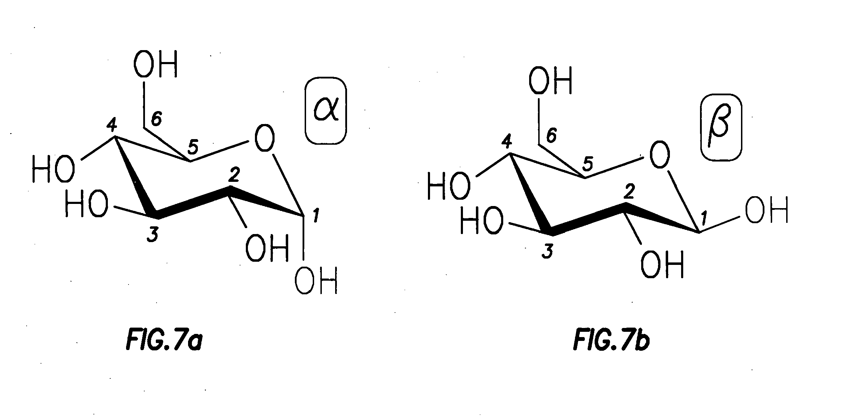

**Figures 7a and 7b** illustrate the α- and P- conformers of glucose. In a chair type of conformation, which is the most stable conformation of cyclic carbohydrates, such as glucose, in the α- position the hydroxyl group of carbon C1 is positioned in an axial plane relative to the ring, whereas in in the P- position the hydroxyl group of carbon C1 is positioned in an equatorial plane from the ring structure, as shown in **Figures 7a** and **7b****,** respectively. The position of the hydroxyl group in the α conformer is axial, whereas in the β conformer it is equatorial.

### DETAILED DESCRIPTION OF PRESENTLY PREFERRED EMBODIMENTS

### Definitions and Usages

### Interpretation

The words or terms used herein have their plain, ordinary meaning in the field of this disclosure, except to the extent explicitly and clearly defined in this disclosure.

If there is any conflict in the usages of a word or term in this disclosure and one or more patent(s) or other documents that may be incorporated by reference, the definitions that are consistent with this specification should be adopted.

The words "comprising," "containing," "including," "having," and all grammatical variations thereof are intended to have an open, non-limiting meaning. For example, a composition comprising a component does not exclude it from having additional components, an apparatus comprising a part does not exclude it from having additional parts, and a method having a step does not exclude it having additional steps. When such terms are used, the compositions, apparatuses, and methods that "consist essentially of" or "consist of" the specified components, parts, and steps are specifically included and disclosed.

The indefinite articles "a" or "an" mean one or more than one of the component, part, or step that the article introduces.

Terms such as "first," "second," "third," etc. are assigned arbitrarily and are merely intended to differentiate between two or more components, parts, or steps that are otherwise similar or corresponding in nature, structure, function, or action. For example, the words "first" and "second" serve no other purpose and are not part of the name or description of the following name or descriptive terms. The mere use of the term "first" does not require that there be any "second" similar or corresponding component, part, or step. Similarly, the mere use of the word "second" does not require that there by any "first" or "third" similar or corresponding component, part, or step. Further, it is to be understood that the mere use of the term "first" does not require that the element or step be the very first in any sequence, but merely that it is at least one of the elements or steps. Similarly, the mere use of the terms "first" or "second" does not necessarily require any sequence. Accordingly, the mere use of such terms does not exclude intervening elements or steps between the "first" and "second" elements or steps, etc.

### Oil and Gas Reservoirs

In the context of production from a well, oil and gas are understood to refer to crude oil and natural gas.

Oil and gas are naturally occurring hydrocarbons in certain subterranean formations.

A "subterranean formation" is a body of rock that has sufficiently distinctive characteristics and is sufficiently continuous for geologists to describe, map, and name it.

A subterranean formation having a sufficient porosity and permeability to store and transmit fluids is sometimes referred to as a "reservoir."

A subterranean formation containing oil or gas may be located under land or under the seabed off shore. Oil and gas reservoirs are typically located in the range of a few hundred feet (shallow reservoirs) to a few tens of thousands of feet (ultra-deep reservoirs) below the surface of the land or seabed.

### Well Therms

A "well" includes a wellhead and at least one wellbore from the wellhead penetrating the earth. The "wellhead" is the surface termination of a wellbore, which surface may be on land or on a seabed. A "well site" is the geographical location of a wellhead of a well. It may include related facilities, such as a tank battery, separators, compressor stations, heating or other equipment, and fluid pits. If offshore, a well site can include a platform.

The "wellbore" refers to the drilled hole, including any cased or uncased portions of the well. The "borehole" usually refers to the inside wellbore wall, that is, the rock face or wall that bounds the drilled hole. A wellbore can have portions that are vertical, horizontal, or anything in between, and it can have portions that are straight, curved, or branched. As used herein, "uphole," "downhole," and similar terms are relative to the direction of the wellhead, regardless of whether a wellbore portion is vertical or horizontal.

A wellbore can be used as a production or injection wellbore. A production wellbore is used to produce hydrocarbons from the reservoir. An injection wellbore is used to inject a fluid, e.g., liquid water or steam, to drive oil or gas to a production wellbore.

As used herein, introducing "into a well" means introduced at least into and through the wellhead. According to various techniques known in the art, tubulars, equipment, tools, or well fluids can be directed from the wellhead into any desired portion of the wellbore.

As used herein, a "well fluid" broadly refers to any fluid adapted to be introduced into a well for any purpose. A well fluid can be, for example, a drilling fluid, a cementing composition, a treatment fluid, or a spacer fluid. If a well fluid is to be used in a relatively small volume, for example less than about 200 barrels (32 m³), it is sometimes referred to as a wash, dump, slug, or pill.

As used herein, the word "treatment" refers to any treatment for changing a condition of a portion of a wellbore or an adjacent subterranean formation; however, the word "treatment" does not necessarily imply any particular treatment purpose. A treatment usually involves introducing a well fluid for the treatment, in which case it may be referred to as a treatment fluid, into a well. As used herein, a "treatment fluid" is a fluid used in a treatment. Unless the context otherwise requires, the word "treatment" in the term "treatment fluid" does not necessarily imply any particular treatment or action by the fluid.

A zone refers to an interval of rock along a wellbore that is differentiated from uphole and downhole zones based on hydrocarbon content or other features, such as permeability, composition, perforations or other fluid communication with the wellbore, faults, or fractures. A zone of a wellbore that penetrates a hydrocarbon-bearing zone that is capable of producing hydrocarbon is referred to as a "production zone." A "treatment zone" refers to an interval of rock along a wellbore into which a well fluid is directed to flow from the wellbore. As used herein, "into a treatment zone" means into and through the wellhead and, additionally, through the wellbore and into the treatment zone.

As used herein, a downhole fluid is an in-situ fluid in a well, which may be the same as a well fluid at the time it is introduced, or a well fluid mixed with another other fluid downhole, or a fluid in which chemical reactions are occurring or have occurred in-situ downhole.

Generally, the greater the depth of the formation, the higher the static temperature and pressure of the formation. Initially, the static pressure equals the initial pressure in the formation before production. After production begins, the static pressure approaches the average reservoir pressure.

A "design" refers to the estimate or measure of one or more parameters planned or expected for a particular well fluid or stage of a well service. For example, a fluid can be designed to have components that provide a minimum viscosity for at least a specified time under expected downhole conditions. A well service may include design parameters such as fluid volume to be pumped, required pumping time for a treatment, or the shear conditions of the pumping.

The term "design temperature" refers to an estimate or measurement of the actual temperature at the downhole environment at the time of a well treatment. That is, design temperature takes into account not only the bottom hole static temperature ("BHST"), but also the effect of the temperature of the well fluid on the BHST during treatment. The design temperature is sometimes referred to as the bottom hole circulation temperature ("BHCT"). Because treatment fluids may be considerably cooler than BHST, the difference between the two temperatures can be quite large. Ultimately, if left undisturbed, a subterranean formation will return to the BHST.

### Physical States and Phases

As used herein, "phase" is used to refer to a substance having a chemical composition and physical state that is distinguishable from an adjacent phase of a substance having a different chemical composition or different physical state.

As used herein, if not other otherwise specifically stated, the physical state or phase of a substance (or mixture of substances) and other physical properties are determined at a temperature of 77 °F (25 °C) and a pressure of 1 atmosphere (Standard Laboratory Conditions) without applied shear.

### Particle Terms

As used herein, unless the context otherwise requires, a "particle" refers to a body having a finite mass and sufficient cohesion such that it can be considered as an entity but having relatively small dimensions. A particle can be of any size ranging from molecular scale to macroscopic, depending on context.

A particle can be in any physical state. For example, a particle of a substance in a solid state can be as small as a few molecules on the scale of nanometers up to a large particle on the scale of a few millimeters, such as large grains of sand. Similarly, a particle of a substance in a liquid state can be as small as a few molecules on the scale of nanometers or a large drop on the scale of a few millimeters. A particle of a substance in a gas state is a single atom or molecule that is separated from other atoms or molecules such that intermolecular attractions have relatively little effect on their respective motions.

As used herein, "particulate" or "particulate material" refers to matter in the physical form of distinct particles in a solid or liquid state (which means such an association of a few atoms or molecules). A particulate is a grouping of particles based on common characteristics, including chemical composition and particle size range, particle size distribution, or median particle size. As used herein, a particulate is a grouping of particles having similar chemical composition and particle size ranges anywhere in the range of about 1 micrometer (e.g., microscopic clay or silt particles) to about 3 millimeters (e.g., large grains of sand).

A particulate can be of solid or liquid particles. As used herein, however, unless the context otherwise requires, particulate refers to a solid particulate. Of course, a solid particulate is a particulate of particles that are in the solid physical state, that is, the constituent atoms, ions, or molecules are sufficiently restricted in their relative movement to result in a fixed shape for each of the particles.

### Solubility Terms

A substance is considered to be "soluble" in a liquid if at least 10 grams of the substance can be dissolved in one liter of the liquid when tested at 77 °F and 1 atmosphere pressure for 2 hours and considered to be "insoluble" if less soluble than this.

As will be appreciated by a person of skill in the art, the hydratability, dispersibility, or solubility of a substance in water can be dependent on the salinity, pH, or other substances in the water. Accordingly, the salinity, pH, and additive selection of the water can be modified to facilitate the hydratability, dispersibility, or solubility of a substance in aqueous solution. To the extent not specified, the hydratability, dispersibility, or solubility of a substance in water is determined in deionized water, at neutral pH, and without any other additives.

The "source" of a chemical species in a solution or fluid composition, can be a substance that makes the chemical species chemically available immediately or it can be a substance that gradually or later releases the chemical species to become chemically available.

### Fluids

A fluid can be a single phase or a dispersion. In general, a fluid is an amorphous substance that is or has a continuous phase of particles that are smaller than about 1 micrometer that tends to flow and to conform to the outline of its container.

Examples of fluids are gases and liquids. A gas (in the sense of a physical state) refers to an amorphous substance that has a high tendency to disperse (at the molecular level) and a relatively high compressibility. A liquid refers to an amorphous substance that has little tendency to disperse (at the molecular level) and relatively high incompressibility. The tendency to disperse is related to Intermolecular Forces (also known as van der Waal's Forces). (A continuous mass of a particulate, e.g., a powder or sand, can tend to flow as a fluid depending on many factors such as particle size distribution, particle shape distribution, the proportion and nature of any wetting liquid or other surface coating on the particles, and many other variables. Nevertheless, as used herein, a fluid does not refer to a continuous mass of particulate as the sizes of the solid particles of a mass of a particulate are too large to be appreciably affected by the range of Intermolecular Forces.)

As used herein, a fluid is a substance that behaves as a fluid under Standard Laboratory Conditions, that is, at 77 °F (25 °C) temperature and 1 atmosphere pressure, and at the higher temperatures and pressures usually occurring in subterranean formations without applied shear.

Every fluid inherently has at least a continuous phase. A fluid can have more than one phase. The continuous phase of a well fluid is a liquid under Standard Laboratory Conditions. For example, a well fluid can in the form of be a suspension (solid particles dispersed in a liquid phase), an emulsion (liquid particles dispersed in another liquid phase), or a foam (a gas phase dispersed in liquid phase).

As used herein, a water-based fluid means that water or an aqueous solution is the dominant material, that is, greater than 50% by weight, of the continuous phase of the substance.

In contrast, "oil-based" means that oil is the dominant material by weight of the continuous phase of the substance. In this context, the oil of an oil-based fluid can be any oil. In general, an oil is any substance that is liquid Standard Laboratory Conditions, is hydrophobic, and soluble in organic solvents. Oils have a high carbon and hydrogen content and are relatively non-polar substances, for example, having a polarity of 3 or less on the Synder polarity index. This general definition includes classes such as petrochemical oils, vegetable oils, and many organic solvents. All oils can be traced back to organic sources.

### Apparent Viscosity of a Fluid

Viscosity is a measure of the resistance of a fluid to flow. In everyday terms, viscosity is "thickness" or "internal friction." Thus, pure water is "thin," having a relatively low viscosity whereas honey is "thick," having a relatively higher viscosity. Put simply, the less viscous the fluid is, the greater its ease of movement (fluidity). More precisely, viscosity is defined as the ratio of shear stress to shear rate.

A Newtonian fluid (named after Isaac Newton) is a fluid for which stress versus strain rate curve is linear and passes through the origin. The constant of proportionality is known as the viscosity. Examples of Newtonian fluids include water and most gases. Newton's law of viscosity is an approximation that holds for some substances but not others.

Non-Newtonian fluids exhibit a more complicated relationship between shear stress and velocity gradient (i.e., shear rate) than simple linearity. Thus, there exist a number of forms of non-Newtonian fluids. Shear thickening fluids have an apparent viscosity that increases with increasing the rate of shear. Shear thinning fluids have a viscosity that decreases with increasing rate of shear. Thixotropic fluids become less viscous over time at a constant shear rate. Rheopectic fluids become more viscous over time at a constant sear rate. A Bingham plastic is a material that behaves as a solid at low stresses but flows as a viscous fluid at high stresses.

Most well fluids are non-Newtonian fluids. Accordingly, the apparent viscosity of a fluid applies only under a particular set of conditions including shear stress versus shear rate, which must be specified or understood from the context. In the oilfield and as used herein, unless the context otherwise requires it is understood that a reference to viscosity is actually a reference to an apparent viscosity. Apparent viscosity is commonly expressed in units of centipoise ("cP").

Like other physical properties, the viscosity of a Newtonian fluid or the apparent viscosity of a non-Newtonian fluid may be highly dependent on the physical conditions, primarily temperature and pressure.

### Gels and Reformation

The physical state of a gel is formed by a network of interconnected molecules, such as a crosslinked polymer or a network of micelles. The network gives a gel phase its structure and an apparent yield point. At the molecular level, a gel is a dispersion in which both the network of molecules is continuous and the liquid is continuous. A gel is sometimes considered as a single phase.

Technically, a "gel" is a semi-solid, jelly-like physical state or phase that can have properties ranging from soft and weak to hard and tough. Shearing stresses below a certain finite value fail to produce permanent deformation. The minimum shear stress which will produce permanent deformation is referred to as the shear strength or gel strength of the gel.

In the oil and gas industry, however, the term "gel" may be used to refer to any fluid having a viscosity-increasing agent, regardless of whether it is a viscous fluid or meets the technical definition for the physical state of a gel. A "base gel" is a term used in the field for a fluid that includes a viscosity-increasing agent, such as guar, but that excludes crosslinking agents. Typically, a base gel is mixed with another fluid containing a crosslinker, wherein the mixture is adapted to form a crosslinked gel. Similarly, a "crosslinked gel" may refer to a substance having a viscosity-increasing agent that is crosslinked, regardless of whether it is a viscous fluid or meets the technical definition for the physical state of a gel.

As used herein, unless otherwise specified or the context otherwise requires, a substance referred to as a "gel" is subsumed by the concept of "fluid" if it is a pumpable fluid.

### Viscosity and Gel Measurements

There are numerous ways of measuring and modeling viscous properties, and new developments continue to be made. The methods depend on the type of fluid for which viscosity is being measured. A typical method for quality assurance or quality control (QA/QC) purposes uses a couette device, such as a Fann Model 35 or 50 viscometer or a Chandler 5550 HPHT viscometer, that measures viscosity as a function of time, temperature, and shear rate. The viscosity-measuring instrument can be calibrated using standard viscosity silicone oils or other standard viscosity fluids.

Due to the geometry of most common viscosity-measuring devices, however, solid particulate, especially if larger than silt (larger than 74 micron), would interfere with the measurement on some types of measuring devices. Therefore, the viscosity of a fluid containing such solid particulate is usually inferred and estimated by measuring the viscosity of a test fluid that is similar to the fracturing fluid without any proppant or gravel that would otherwise be included. However, as suspended particles (which can be solid, gel, liquid, or gaseous bubbles) usually affect the viscosity of a fluid, the actual viscosity of a suspension is usually somewhat different from that of the continuous phase.

Unless otherwise specified, the apparent viscosity of a fluid (excluding any suspended solid particulate larger than silt) is measured with a Fann Model 50 type viscometer using an R1 rotor, B1 bob, and F1 torsion spring at a shear rate of 40 1/s, and at a temperature of 77 °F (25 °C) and a pressure of 1 atmosphere. For reference, the viscosity of pure water is about 0.001 Pa·s s (1 cP).

A substance is considered to be a fluid if it has an apparent viscosity less than 5 Pa·s (5,000 cP) (independent of any gel characteristic).

As used herein, a fluid is considered to be "viscous" if it has an apparent viscosity of 0.01 Pa·s (10 cP) or higher. The viscosity of a viscous fluid is considered to break or be broken if the viscosity is greatly reduced. Preferably, although not necessarily for all applications depending on how high the initial viscosity of the fluid, the viscous fluid breaks to a viscosity of 0.005 Pa·s (5 cP) or lower.

### Self-Degrading

As used herein, the term "self-degrading" means it can be removed without the need to circulate a separate "clean up" or breaker fluid into the treatment zone, wherein such clean up or breaker fluid would have no purpose other than to degrade the cross-linking or degrade the polymer backbone of a viscosity-increasing agent. Though "self-degrading," an operator may nevertheless elect to circulate a separate clean up or breaker fluid through the well bore and into the treatment zone under certain circumstances, such as when the operator desires to hasten the rate of degradation.

### General Measurement Terms

Unless otherwise specified or unless the context otherwise clearly requires, any ratio or percentage means by weight.

Unless otherwise specified or unless the context otherwise clearly requires, the phrase "by weight of the water" means the weight of the water of the continuous phase of the fluid without the weight of any viscosity-increasing agent, dissolved salt, suspended particulate, or other materials or additives that may be present in the water.

Any doubt regarding whether units are in U.S. or Imperial units, where there is any difference, U.S. units are intended. For example, "gal/Mgal" means U.S. gallons per thousand U.S. gallons.

### Discussion

Borate cross-linked guar and guar-derivatives (e.g., HPG and CMHPG) have been used extensively in the oil industry as cross-linked biopolymers for fracturing, fluid-loss control, and temporary kill pills in various well services.

Early attempts to incorporate an internal breaker system have failed, mainly because of the fast rate of internal breakers, either oxidizers or acid generators. The relatively slow release of H⁺ by the hydrolysis of a polysaccharide will ensure longer stability of the guar structure and will hopefully provide a way to control the system in such a way that a cross-linked guar pill can self-degrade in a determined length of time, much more longer than the time frame provided by the current repertoire of internal breakers.

There has been some interest in the borate cross-linked guar even though we have not been able, on many occasions, to deliver a self-degradation property that can be tailored to specific needs.

In an embodiment, a purpose of the invention is to have a method using a water-based treatment fluid that is viscosified with a cross-linked β-polysaccharide, such as borate cross-linked guar or guar derivatives, with a second biopolymer having a faster rate of hydrolysis, which will generate at least a sufficient concentration of acid via the hydrolysis to lower the pH of the aqueous medium. This lowering of the pH can be used for the purpose of disrupting the pH-dependent borate cross-linking. In addition, it can be used for helping in the hydrolysis of a β-polysaccharide, such as guar-based polymers.

The invention provides a customizable, self-degradable, treatment fluid for moderate temperature applications up to 120 °C (248 ^{o}F) that will allow a well intervention without the need for an extra trip downhole to help remove the treatment fluid. The system has particular application where the design temperature is less than 100 °C (212 °C).

In addition, the treatment fluid can be substantially or essentially free of solid particulates, such that it can be used as a solids-less kill pill, for example.

### β-Polysaccharides (e.g., Guar)

Polysaccharides include, for example, starch, cellulose, chitin, callose or laminarin, chrysolaminarin, xylan, arabinoxylan, mannan, fucoidan, and galactomannan. As known in the art, polysaccharides can be linked through an α- or β- configuration of the anomeric carbon (C1) in the pyranose ring of a glucose unit.

Guar is a β-galactomannan, where a β-galactomannan is a polysaccharide consisting of a mannose backbone with galactose side groups (more specifically, a (1-4)-linked beta-D-mannopyranose backbone with branch points from their 6-positions linked to alpha-D-galactose, i.e. 1-6-linked alpha-D-galactopyranose). Galactomannans have mannose-to-galactose ratios as follows: for fenugreek gum, mannose:galactose about 1:1; for guar gum, mannose:galactose about 2:1; for tara gum, mannose:galactose about 3:1; and for locust bean gum or carob gum, mannose:galactose about 4:1.

A β-galactomannan is a long, linear and naturally occurring polysaccharide of high molecular weight (typically 2 x 10⁶ Da). The main polysaccharide chain, joined by β-1,4-glycosidic linkages is heavily substituted by single units of galactose. The molecular structure of the polysaccharide is shown in **Figure 1****.** At a closer look it can be seen that the galactose possess two hydroxyl groups (at C2-C3) pointing in the same direction of a plane. These groups are said to be in a *cis*-conformation and are sufficiently close to one another as to allow a coordinate ionic interaction with a multivalent ion.

The linear polymer has a great affinity for water and can absorb up to ten times its dry weight in water. This property imparts a viscosity effect when in aqueous solution similar to the viscosity imparted by xanthan gum. The viscosity is also affected by the ability of the linear chain to interact via hydrogen bonding and it is influenced by the pH of the solution. At higher pH, the carboxyl group (C6) is de-protonated and readily charged, which increases the chances of molecular interactions. In contrast, at acidic pH, the carboxyl group is protonated, decreasing the chances of interactions, which is seen with a decrease in viscosity. Furthermore, at acidic pH the linear polymer can adopt coiled structures, which further influence the final viscosity of the solution.

**Figure 1** shows the skeletal structure of β-galactomannan. The structure on the left side shows the linear polymer with the β-mannan backbone and galactose side-chain. The structure on the right side is a magnification of the encircled portion of the structure on the left side to show the *cis* position of hydroxyls in the galactose moiety, which is responsible for the coordinated ionic bonding with the cross-linker molecule.

### Crosslinking of Certain Polymers

Certain polymers, such as guar, have functional groups that allow them to be cross-linked. If cross-linked with a transition metal (e.g., titanium and zirconium salts) and other such cross-linker molecules, the cross-linking is via covalent bonding. A covalently cross-linked polymer is considered relatively irreversibly cross-linked.

Alternatively, such polymers can be ionically cross-linked, forming reversible ionic bonding. For example, the ionic nature of the cross-linked guar creates a 3D structure that is dynamic and shear-thinning. That is, the viscosity of the cross-linked product decreases as shear rates increases, making the cross-linked polymer highly viscous but pumpable. The reversible characteristic of the cross-linked polymer structure also helps to clean up more effectively, resulting in good regained permeability and conductivity in a treatment zone of a subterranean formation. The dynamic cross-linking also provides an additional property to the gelling structure; the gel shows a "self-healing" property, which can be observed as the gel reforming a continuous 3D structure after been broken due to high shear forces.

The chemistry of an ionic cross-linker in solution is pH and temperature dependent. **Figures 2 and 3** show the chemical equilibrium of the borate cross-linker and the dependence of the pH and temperature on the chemical equilibrium, respectively.

**Figure 2** shows the chemical equilibrium of the ionic cross-linker molecule in solution. At higher pH values (abundant OH⁻), the cross-linker adopts a tetra-dentate configuration that forms inter-molecular ionic bridges when polyol (e.g. sugars) are present.

**Figure 3** is a graph showing effect of the temperature and pH on the ionization of the borate cross-linker. **Figure 3** shows that a minimum pH of about 10.0 is required in order to have about 80% ionization of the cross-linker molecule at a temperature of 100 °F (37.7 °C). In addition, **Figure 3** shows that the higher the temperature, the higher the pH of the solution that is required to achieve a significant ionization of the cross-linker.

The borate cross-linker species, once in a state of total ionization and in the presence of a molecule presenting hydroxyl groups in close proximity, such as the hydroxyl groups in *cis* position in the galactose side-chain of the β-galactomannan, will form either 1:1 or 1:2 complexes, as shown in **Figure 4a and 4b****,** respectively. **Figures 4a and 4b** are chemical skeletal structures showing the interactions of a borate cross-linker with the *cis*-diol of galactose. **Figure 4a** shows the structure of a 1:1 complex and **Figure 4b** shows the chemical structure of 1:2 complex that forms inter-molecular ionic bridges (cross-links) between galactose units of the galactomannan molecules. The 1:2 complex shown in **Figure 4b** is responsible for the increase in viscosity at higher pH values.

Based on steric constraints of the main β-mannan chain, the interaction occurs preferentially at the galactose side-chain, a fact that is also evidenced by variations in cross-linking capacity of different naturally occurring β-galactomannan biopolymers with different degrees of galactose substitution. It is estimated that only 1% of the cross-linker ion is actually involved in 1:2 complex (cross-linking).

### Hydrolysis of a β-Polysaccharide (e.g., Guar)

A β-polysaccharide, such as guar, may also exhibits an additional characteristic: at higher temperature and relatively low pH, guar, for example, will start to get hydrolyzed and the whole structure is ultimately degraded. **Figure 5** is a diagram showing the mechanisms of acid hydrolysis of a β-(1,4) glucan. Note the production of H⁺ in hydrolysis pathway II'.

Currently, for a borate-crosslinked guar system, dropping the pH to less than 8 will be sufficient to interrupt the cross-linking process and render the polymer solution to a much lower viscosity, thus it loses its capacity to retain water and block porous formation rock. It is, thus, desirable for a solids-less kill pill to be able to manipulate the system in order to incorporate an acidification step, which will facilitate: (1) interruption of the cross-linking process by reversing the borate ion into a protonated state; and (2) facilitate the hydrolysis of the polymer (degradation) which occurs at a much faster rate at a low pH.

Nevertheless, our experience with borate cross-linked guar has proven that trying to manipulate the system by the addition of either NaOH, Na₂CO₃, or both in an effort to buffer the pH so the guar remains cross-linked and intact for a pre-determined length of time and within a narrow temperature range, have been so far frustrating. The lower the temperature, the more difficult is to control the hydrolysis.

The NaOH or Na₂CO₃ are unable to adequately control a self-degrading property to the guar system, especially at lower temperatures.

### Borate Cross-Linked β-Polysaccharide with Addition of α-Polysaccharide

The present invention is to disclose a different system that will generate, *in situ,* enough acid power to stop the cross-linking reaction as well as to facilitate hydrolysis of a β-polysaccharide polymer, such as guar or a guar derivative.

### Energy of Hydrolysis

As used herein, a glycoside is any molecule in which a sugar group is bonded through its anomeric carbon to another group via a glycosidic bond. As used herein, an α-polysaccharide is a polysaccharide having α-O-glycosidic linkages between at least some of the monosaccharide units of the polymeric backbone. Similarly, as used herein, a β-polysaccharide an β-polysaccharide is a polysaccharide having β-O-glycosidic linkages between at least some of the monosaccharide units of the polymeric backbone.

It is well-known that α-O-glycosides (such as starch) are prone to hydrolysis as compared to β-O-glycosides (such as a galactomannan). During the spontaneous hydrolysis of an O-glycosidic linkage, the overall reaction renders an H⁺, which is believed to be responsible for the drop of pH, over time, of a solution of guar incubated at a certain temperature.

As guar is a β-galactomannan, that is, having β-O-glycosidic linkages, the energy required to destabilize and break the β-linkage is significantly higher than for the otherwise equivalent α-linkage. The latter is a fact derived from the structure and nature of the two molecules of glucose linked by either α- or β-O-glycosidic linkages as depicted in **Figures 6a and 6b****,** respectively. **Figures 6a and 6b** are stereo images of glucose linked by α-(1,4)-O-glycosidic linkages (e.g., amylose) and β-(1,4)-O-glycosidic linkages (e.g., cellulose), **respectively.** Note that the overall configuration of the α-(1,4)-linked O-glycoside tends to adopt a helical configuration due to steric and geometric restrictions of the α-O-linkage, whereas the overall configuration of the β-(1,4)-linked O-glycoside tends to be linear. The α-linkages are, therefore, more unstable and prone to hydrolysis as compared to the β-linkages.

Starches are glucose polymers in which glucopyranose units are bonded by α-linkages. It is made up of a mixture of amylopectin (80-85%) and amylose (15-20%). Amylopectin is a water-soluble polysaccharide that is a highly branched polymer of glucose found in plants. The glucose units are linked in a linear way with α-(1,4) glycosidic bonds. Branching takes place with α-(1,6) bonds occurring every 24 to 30 glucose units. Amylose is an insoluble polysaccharide that is a linear polymer of glucose mainly linked with α-(1,4) bonds. In contrast to amylopectin, amylose contains very few α-(1,6) bonds, which causes it to be hydrolyzed more slowly than amylopectin but have a higher density and be insoluble.

While starch is currently used in oilfield applications such as fracturing, drilling and diversion; however, in such applications the starch is not fully solubilized and is deposited onto the fracture surface or formation wall as part of the filtercake. Considerable effort is placed in the cleanup of filter cakes e.g. prior to gravel packing to ensure minimum impairment to flow of formation fluids.

### α- or β- Hydroxyl at Anomeric Carbon of Ring Defines Linkage and Impacts Hydrolysis

An α- or β- configuration of the anomeric carbon (C1) in the pyranose ring has a tremendous impact on the overall conformation of the polysaccharide as well as the energy of hydrolysis.

For instance, in a chair type of conformation, which is the most stable conformation of cyclic carbohydrates, such as glucose, in the α- position the hydroxyl group of carbon C1 is positioned in an axial plane relative to the ring, whereas in in the β- position the hydroxyl group of carbon C1 is positioned in an equatorial plane from the ring structure, as shown in **Figures 7a** and **7b****,** respectively.

**Figures 7a** and **7b** illustrate the α- and β- conformers of glucose. Note the position of the hydroxyl group in the α conformer (axial) and the β conformer (equatorial)

In the α-conformer, the OH group of C1 is positioned axially with respect with the cyclic ring structure, as shown in **Figure 7a****,** which can be translated as a maximum interaction of the OH group with the rest of the ring of glycopyranose. In contrast, in the β conformer is that the electrophilic oxygen is away from the ring structure, as shown in **Figure 7b****,** conferring, thus, the minimum state of energy and, therefore, the higher thermodynamic stability.

A steric problem is derived from these α- and P- conformers. An α-linked glucose, for instance, has an angle and a rotation of the monosaccharides over the oxygen bridge, namely Φ and Ψ, that are much restricted, as shown in **Figure 6a****.** In contrast, the rotation on the angles Φ and Ψ on a β-O-glycosidic linkage is more flexible, as shown in **Figure 6b**, which then allows the molecule to adopt an overall conformation with minimum energy, as depicted in **Figure 6b****.**

The thermodynamic implication of the orientation of the α-and β- O-linkages become manifest in the transition from crystalline to amorphous state between starch, which is a α-(1,4) / α-(1,6) glucan, and cellulose, which is a β-(1,4) glucan. Whereas starch undergoes a crystalline to amorphous transition when heated beyond about 60 to 70 °C in water (as in cooking), cellulose requires a temperature of 320 °C and pressure of 25 MPa to become amorphous in water.

According to this invention, an α-linked polysaccharide is added to a solution with cross-linked β-polysaccharide. The α-linked polysaccharide is expected to be degraded slightly faster than the β-polysaccharide, providing, at a controllable rate which depends on concentration of the α-linked polysaccharide with a slow release of H⁺ to facilitate interruption of the borate cross-linking reaction, transforming the fluid into a much less viscous solution, and polymer break down of the guar.

According to a preferred embodiment of the invention, guar or a guar-derivative, e.g., hydroxyethyl guar ("HEG") or a carboxymethyl hydroxyethyl guar ("CMHEG"), is mixed with partially-hydrolyzed starch.

### Optional Alginate

Preferably, the treatment fluid additionally comprises sodium alginate, which can help control undesirable covalent cross-linking of a polymer with multi-valent cations that may be present in the water, such as calcium. Since sodium alginate is a polyanionic polysaccharide, it interacts with divalent cation, such as calcium. Calcium is known to cross-link alginate at high pH values. Alginate can serve as a sink for divalent ion in guar or guar-derivative solution providing an additional protection from covalent, irreversible crosslinking by divalent cations.

Alginates are insoluble in water, but absorb water readily. In addition, sodium alginate has low thermal stability, which means it is readily degradable in the well.

Alginic acid, also called algin or alginate, is an anionic polysaccharide distributed widely in the cell walls of brown algae, where it, through binding water, forms a viscous gum. In extracted form it absorbs water quickly; it is capable of absorbing 200-300 times its own weight in water. Its color ranges from white to yellowish-brown. It is sold in filamentous, granular, or powdered forms. It is a linear copolymer with homopolymeric blocks of (1-4)-linked β-D-mannuronate (M) and its C-5 epimer α-L-guluronate (G) residues, respectively, covalently linked together via β-linkages in different sequences or blocks. The chemical constituents of alginate are random sequences of chains of β-D-mannuronic and α-L-guluronic acids attached with β-(1→4) linkages.

Commercial varieties of alginate are extracted from seaweed, including the giant kelp Macrocystis pyrifera, Ascophyllum nodosum, and various types of Laminaria. It is also produced by two bacterial genera Pseudomonas and Azotobacter, which played a major role in the unravelling of its biosynthesis pathway. Bacterial alginates are useful for the production of micro- or nanostructures suitable for medical applications.

### Method of Treating a Well

According to the invention, a method of treating a well is provided, the method including the steps of: (A) forming a treatment fluid comprising: (i) water; (ii) a water-soluble β-polysaccharide, which is a β-galactomannan; (iii) a borate cross-linker; (iv) a base to adjust the pH of the water in the treatment fluid to be at least 8.5; and (v) a water-soluble α-polysaccharide comprising partially hydrolyzed starch; and (B) introducing the treatment fluid into the well.

### Step of Forming Well Fluid

A well fluid can be prepared at the job site, prepared at a plant or facility prior to use, or certain components of the well fluid can be pre-mixed prior to use and then transported to the job site. Certain components of the well fluid may be provided as a "dry mix" to be combined with fluid or other components prior to or during introducing the well fluid into the well.

In certain embodiments, the preparation of a well fluid can be done at the job site in a method characterized as being performed "on the fly." The term "on-the-fly" is used herein to include methods of combining two or more components wherein a flowing stream of one element is continuously introduced into flowing stream of another component so that the streams are combined and mixed while continuing to flow as a single stream as part of the on-going treatment. Such mixing can also be described as "real-time" mixing.

### Water - Continuous Aqueous Phase

The treatment fluid is preferably a water-based fluid wherein the continuous aqueous phase of the fluid is greater than 50% by weight water.

The water preferably is present in the treatment fluids in an amount at least sufficient to substantially hydrate the viscosity-increasing agent. In some embodiments, the aqueous phase, including the dissolved materials therein, may be present in the treatment fluids in an amount in the range from about 5% to 100% by volume of the treatment fluid.

Preferably, the water for use in the treatment fluid does not contain anything that would adversely interact with the other components used in the well fluid or with the subterranean formation.

The aqueous phase can include freshwater or non-freshwater. Non-freshwater sources of water can include surface water ranging from brackish water to seawater, brine, returned water (sometimes referred to as flowback water) from the delivery of a well fluid into a well, unused well fluid, and produced water. As used herein, brine refers to water having at least 40,000 mg/L total dissolved solids.

In some embodiments, the aqueous phase of the treatment fluid may comprise a brine. The brine chosen should be compatible with the formation and should have a sufficient density to provide the appropriate degree of well control.

Salts may optionally be included in the treatment fluids for many purposes. For example, salts may be added to a water source, for example, to provide a brine, and a resulting treatment fluid, having a desired density. Salts may optionally be included for reasons related to compatibility of the treatment fluid with the formation and formation fluids. To determine whether a salt may be beneficially used for compatibility purposes, a compatibility test may be performed to identify potential compatibility problems. From such tests, one of ordinary skill in the art with the benefit of this disclosure will be able to determine whether a salt should be included in a treatment fluid.

Suitable salts can include, but are not limited to, calcium chloride, sodium chloride, magnesium chloride, potassium chloride, sodium bromide, potassium bromide, ammonium chloride, sodium formate, potassium formate, cesium formate, mixtures thereof, and the like. The amount of salt that should be added should be the amount necessary for formation compatibility, such as stability of clay minerals, taking into consideration the crystallization temperature of the brine, *e.g*., the temperature at which the salt precipitates from the brine as the temperature drops.

### Removal of Undesirable Crosslinking Cations from the Water

Brines and other water sources may include those that comprise monovalent, divalent, or trivalent cations. Some divalent or trivalent cations, such as magnesium, calcium, iron, and zirconium, may, in some concentrations and at some pH levels, cause undesirable crosslinking of a polymeric viscosity-increasing agent. Such crosslinking may be problematic because, *inter alia,* it may cause filtration problems, injection problems, or causes regain permeability problems. For example, the cross-linking may be irreversible.

If a water source is used which contains such divalent or trivalent cations in concentrations sufficiently high to be problematic, then such divalent or trivalent salts may be removed, either by a process such as reverse osmosis, or by raising the pH of the water in order to precipitate out such salts to lower the concentration of such salts in the water before the water is used.

Another method would be to include a chelating agent to chemically bind the problematic ions to prevent their undesirable interactions with the polysaccharide. As used herein, the term "chelating agent" or "chelant" also refers to sequestering agents and the like. Suitable chelants include, but are not limited to, citric acid or sodium citrate. Other chelating agents also are suitable.

Generally, the chelating agent may be present in an amount sufficient to prevent crosslinking of the viscosity-increasing agent molecules by any free iron (or any other divalent or trivalent cation) that may be present. In one embodiment, the chelating agent may be present in an amount of from about 0.02% to about 5.0% by weight of the treatment fluid. In another embodiment, the chelating agent is present in an amount in the range of from about 0.02% to about 2.0% by weight of the treatment fluid. One of ordinary skill in the art with the benefit of this disclosure will be able to determine the proper concentration of a chelating agent for a particular application.

Alternatively, or in addition, alginate can optionally included in the well fluid.

### β-Polysaccharide

The treatment fluid according to the invention includes a water-soluble β-polysaccharide, which is a β-galactomannan.

Preferably, the β-polysaccharide is selected from the group consisting of guar, a guar derivative, and any combination thereof, the guar derivative being selected from the group consisting of: a carboxyalkyl derivative of guar, a hydroxyalkyl derivative of guar, and any combination thereof.

### Borate Cross-Linker

The treatment fluid includes a borate cross-linker. Most preferably, the borate is water soluble. For example, the borate cross-linker can be selected from the group consisting of: boric acid, boric acid anhydride, a borate, and any combination thereof. Preferably, the borate is selected from the group consisting of: an alkali metal borate.

### pH and pH Adjuster

Preferably, the pH of the continuous aqueous phase of the treatment fluid is in the range of 8.5 to 12.

In certain embodiments, the treatment fluids can include a pH-adjuster. Preferably, the pH adjuster does not have undesirable properties.

The pH-adjuster may be present in the treatment fluids in an amount sufficient to maintain or adjust the pH of the fluid. In some embodiments, the pH-adjuster may be present in an amount sufficient to adjust the pH of the fluid to a pH in the range of from about 8.5 to about 12. In other embodiments, the pH-adjuster may be present in an amount sufficient to maintain or adjust the pH of the fluid to a pH in the range of from about 10 to about 12.

In general, a pH-adjuster may function, *inter alia,* to adjust the pH of the treatment fluid to, or maintain the pH of the treatment fluid near, a pH that balances the duration of certain properties of the treatment fluid (*e.g.* the ability to suspend particulate) with the ability of the breaker to reduce the viscosity of the treatment fluid or a pH that will result in a decrease in the viscosity of the treatment fluid such that it does not hinder production of hydrocarbons from the formation.

In an embodiment, the pH-adjuster may comprise a small amount of a strong base, such as NaOH and Mg(OH)₂. In other embodiments, the pH-adjuster may be any other substance known in the art capable of maintaining the pH of the breaker in a limited range. One of ordinary skill in the art, with the benefit of this disclosure, will recognize the appropriate pH-adjuster and amount thereof to use for a chosen application.

In an embodiment, the treatment fluid does not include a strong base or water-soluble carbonate. In an embodiment, the water in the treatment fluid is not buffered to maintain the pH in any pH range above 8.5.

### Water-Soluble a-Polysaccharide

The treatment fluid includes a water-soluble α-polysaccharide comprising a partially hydrolyzed starch.

In an embodiment, the concentration of the α-polysaccharide in the water is at least sufficient to produce *in-situ* via hydrolysis at least a sufficient concentration of H+ to reverse the borate cross-linking of the β-polysaccharide. In a further embodiment, the concentration the concentration of the α-polysaccharide in the water is at least sufficient to produce *in-situ* via hydrolysis at least a sufficient concentration of H+ to degrade the β-polysaccharide via hydrolysis of the β-O-glycosidic linkages.

### Alginate

Preferably, the treatment fluid additionally comprises an alginate.

### Without Particulate

In an embodiment, the treatment fluid is substantially free of any solid particulate larger than 37 µm (400 US mesh). This can be useful, for example, in a solids-less kill pill.

### Other Well Fluid Additives

In certain embodiments, the treatment fluids also can optionally comprise other commonly used well fluid additives, such as those selected from the group consisting of surfactants, bactericides, fluid-loss control additives, stabilizers, chelants, scale inhibitors, corrosion inhibitors, hydrate inhibitors, clay stabilizers, salt substitutes (such as trimethyl ammonium chloride), relative permeability modifiers (such as HPT-1^{™} commercially available from Halliburton Energy Services, Duncan, Oklahoma), sulfide scavengers, fibers, nanoparticles, and any combinations thereof

It should be understood, however, that in an embodiment the treatment fluid does not include hydraulic cement and the treatment fluid is not a hydraulic cement composition.

### Introducing Conditions

The method includes the step of introducing the treatment fluid according to the invention into a well.

Often, the step of delivering a well fluid into a well is within a relatively short period after forming the well fluid, e.g., within less than one hour. More preferably, the step of delivering the well fluid is immediately after the step of forming the well fluid, which is "on the fly."

It should be understood that the step of delivering a well fluid into a well can advantageously include the use of one or more fluid pumps.

In an embodiment, the step of introducing is at a rate and pressure below the fracture pressure of the treatment zone. In an embodiment, the step of introducing comprises introducing under conditions for a kill pill in the treatment zone.

In an embodiment, the step of introducing comprises introducing under conditions for fracturing a treatment zone. The fluid is introduced into the treatment zone at a rate and pressure that are at least sufficient to fracture the treatment zone. The fracturing can be according to any method known in the art.

In an embodiment, the treatment fluid has a viscosity at the time of introducing or develops a viscosity in the well that is greater than 0.001 Pa·s (10 cP).

In an embodiment, the step of introducing the treatment fluid into the well is at a design temperature that is less than 120 °C.

### Breaking in the Well without Other Breaker

In an embodiment, the treatment fluid has less than a sufficient concentration of a non-polysaccharide breaker to break the viscosity of the treatment fluid at the design temperature in the absence of the α-polysaccharide. In an embodiment, the treatment fluid is essentially free of any non-polysaccharide breaker. For example, the non-polysaccharide breaker includes any breaker selected from the group consisting of: (a) an acid having a pKa(1) less than 5, (b) an oxidizer, (c) an enzyme, or any combination thereof.

In an embodiment, the treatment zone is not over flushed before flowing back fluid from the treatment zone with a second treatment fluid that comprises a sufficient concentration of a non-polysaccharide breaker to break the viscosity of the treatment fluid in the treatment zone.

### Allowing Time for Breaking in the Well

In an embodiment, the treatment fluid is allowed to break in a treatment zone of the well before flowing back fluid from the treatment zone.

### Flow Back Conditions

In an embodiment, the step of flowing back is within 72 hours of the step of introducing. In another embodiment, the step of flowing back is within 24 hours of the step of introducing.

### Producing Hydrocarbon from Subterranean Formation

Preferably, after any such well treatment, a step of producing hydrocarbon from the subterranean formation is the desirable ultimate objective.

## Claims

1. A method of treating a well, the method comprising the steps of:
(A) forming a treatment fluid comprising:
(i) water;
(ii) a water-soluble β-polysaccharide, which is a β-galactomannan;
(iii) a borate cross-linker;
(iv) a base to adjust the pH of the water in the treatment fluid to be at least 8.5; and
(v) a water-soluble α-polysaccharide comprising partially hydrolyzed starch; and
(B) introducing the treatment fluid into the well.

2. A method according to Claim 1, wherein the water-soluble β-polysaccharide is selected from the group consisting of guar, a carboxyalkyl guar, a hydroxyalkyl guar, and any combination thereof.

3. A method according to Claim 1, wherein the borate cross-linker is selected from the group consisting of boric acid, boric acid anhydride, a borate, and any combination thereof.

4. A method according to Claim 3, wherein the borate is water-soluble.

5. A method according to Claim 3, wherein the borate is an alkali metal borate.

6. A method according to Claim 1, wherein the water in the treatment fluid is not buffered to maintain the pH in a range above 8.5.

7. A method according to Claim 1, wherein the concentration of the water-soluble α-polysaccharide in the water is at least sufficient to produce *in-situ* via hydrolysis at least a sufficient concentration of H⁺ to reverse the borate cross-linking of the water-soluble β-polysaccharide.

8. A method according to Claim 7, wherein the concentration of the water-soluble α-polysaccharide in the water is at least sufficient to produce *in-situ* via hydrolysis at least a sufficient concentration of H⁺ to degrade the water-soluble β-polysaccharide via hydrolysis of the β-O-glycosidic linkages.

9. A method according to Claim 1, wherein the treatment fluid additionally comprises an alginate.

10. A method according to Claim 1, wherein the treatment fluid has a viscosity at the time of introducing it into the well or develops a viscosity in the well that is greater than 0.01 Pa·s (10 cP).

11. A method according to Claim 10, wherein the step of introducing the treatment fluid into the well is performed at a design temperature of less than 120°C.

12. A method according to Claim 11, wherein the treatment zone is not over flushed, before flowing back fluid from the treatment zone, with a second treatment fluid comprising a sufficient concentration of a non-polysaccharide breaker to break the viscosity of the treatment fluid in the treatment zone.

13. A method according to Claim 1, wherein the treatment fluid is allowed to break in a treatment zone of the well before flowing back fluid from the treatment zone.

## Patentansprüche

1. Verfahren zur Behandlung einer Bohrung, wobei das Verfahren die Schritte umfasst:
(A) Bilden einer Behandlungsflüssigkeit, umfassend:
(i) Wasser;
(ii) ein wasserlösliches β-Polysaccharid, das ein β-Galactomannan ist;
(iii) ein Borat-Vernetzungsmittel;
(iv) eine Base, um den pH-Wert des Wassers in der Behandlungsflüssigkeit auf zumindest 8,5 einzustellen; und
(v) ein wasserlösliches α-Polysaccharid, umfassend teilweise hydrolysierte Stärke; und
(B) Einführen der Behandlungsflüssigkeit in die Bohrung.

2. Verfahren gemäss Anspruch 1, wobei das wasserlösliche β-Polysaccharid aus der Gruppe bestehend aus Guar, einem Carboxyalkylguar, einem Hydroxyalkylguar und beliebigen Kombinationen davon ausgewählt ist.

3. Verfahren gemäss Anspruch 1, wobei das Borat-Vernetzungsmittel aus der Gruppe bestehend aus Borsäure, Borsäureanhydrid, einem Borat und beliebigen Kombinationen davon ausgewählt ist.

4. Verfahren gemäss Anspruch 3, wobei das Borat wasserlöslich ist.

5. Verfahren gemäss Anspruch 3, wobei das Borat ein Alkalimetallborat ist.

6. Verfahren gemäss Anspruch 1, wobei das Wasser in der Behandlungsflüssigkeit nicht gepuffert ist, um einen pH-Wert in einem Bereich oberhalb von 8,5 beizubehalten.

7. Verfahren gemäss Anspruch 1, wobei die Konzentration des wasserlöslichen α-Polysaccharids in dem Wasser zumindest ausreichend ist, um in-situ durch Hydrolyse zumindest eine ausreichende Konzentration von H⁺ herzustellen, um die Borat-Vernetzung des wasserlöslichen β-Polysaccharids umzukehren.

8. Verfahren gemäss Anspruch 7, wobei die Konzentration des wasserlöslichen α-Polysaccharids in dem Wasser zumindest ausreichend ist, um in-situ durch Hydrolyse zumindest eine ausreichende Konzentration von H⁺ herzustellen, um das wasserlösliche β-Polysaccharid durch Hydrolyse der β-O-glycosidischen Bindungen abzubauen.

9. Verfahren gemäss Anspruch 1, wobei die Behandlungsflüssigkeit zusätzlich ein Alginat umfasst.

10. Verfahren gemäss Anspruch 1, wobei die Behandlungsflüssigkeit zum Zeitpunkt der Einführung in die Bohrung eine Viskosität aufweist oder in der Bohrung eine Viskosität entwickelt, die grösser als 0,01 Pa·s (10 cP) ist.

11. Verfahren gemäss Anspruch 10, wobei der Schritt der Einführung der Behandlungsflüssigkeit in die Bohrung bei einer Auslegungstemperatur von weniger als 120°C durchgeführt wird.

12. Verfahren gemäss Anspruch 11, wobei die Behandlungszone nicht mit einer zweiten Behandlungsflüssigkeit, umfassend eine ausreichende Konzentration eines Nicht-Polysaccharid-Brechers, um die Viskosität der Behandlungsflüssigkeit in der Behandlungszone zu brechen, überspült wird, bevor Flüssigkeit aus der Behandlungszone zurückfliesst.

13. Verfahren gemäss Anspruch 1, wobei die Behandlungsflüssigkeit in eine Behandlungszone der Bohrung durchbrechen darf, bevor Flüssigkeit aus der Behandlungszone zurückfliesst.

## Revendications

1. Procédé de traitement d'un puits, le procédé comprenant les étapes de :
(A) former un fluide de traitement comprenant :
(i) de l'eau ;
(ii) un β-polysaccharide soluble dans l'eau, qui est un β-galactomannane ;
(iii) un réticulant à base de borate ;
(iv) une base pour ajuster le pH de l'eau dans le fluide de traitement pour être au moins de 8,5 ; et
(v) un α-polysaccharide soluble dans l'eau comprenant de l'amidon partiellement hydrolysé ; et
(B) introduire le fluide de traitement dans le puits.

2. Procédé selon la revendication 1, dans lequel le β-polysaccharide soluble dans l'eau est sélectionné dans le groupe constitué de guar, d'un guar carboxyalkylé, d'un guar hydroxyalkylé, et de toute combinaison de ceux-ci.

3. Procédé selon la revendication 1, dans lequel le réticulant à base de borate est sélectionné dans le groupe constitué d'acide borique, d'anhydride d'acide borique, d'un borate, et de toute combinaison de ceux-ci.

4. Procédé selon la revendication 3, dans lequel le borate est soluble dans l'eau.

5. Procédé selon la revendication 3, dans lequel le borate est un borate de métal alcalin.

6. Procédé selon la revendication 1, dans lequel l'eau dans le fluide de traitement n'est pas tamponnée pour maintenir le pH dans une plage au-dessus de 8,5.

7. Procédé selon la revendication 1, dans lequel la concentration dans l'eau de l'a-polysaccharide soluble dans l'eau est au moins suffisante pour produire *in-situ* par hydrolyse au moins une concentration suffisante de H⁺ pour inverser la réticulation par le borate du β-polysaccharide soluble dans l'eau.

8. Procédé selon la revendication 7, dans lequel la concentration dans l'eau de l'a-polysaccharide soluble dans l'eau est au moins suffisante pour produire *in-situ* par hydrolyse au moins une concentration suffisante de H⁺ pour dégrader le β-polysaccharide soluble dans l'eau par hydrolyse des liaisons β-O-glycosidiques.

9. Procédé selon la revendication 1, dans lequel le fluide de traitement comprend en outre un alginate.

10. Procédé selon la revendication 1, dans lequel le fluide de traitement a une viscosité au moment de l'introduire dans le puits ou développe une viscosité dans le puits qui est supérieure à 0,01 Pa·s (10 cP).

11. Procédé selon la revendication 10, dans lequel l'étape d'introduire le fluide de traitement dans le puits est réalisée à une température de conception de moins de 120°C.

12. Procédé selon la revendication 11, dans lequel la zone de traitement n'est pas surrincée, avant de dégorger le fluide de la zone de traitement, avec un deuxième fluide de traitement comprenant une concentration suffisante d'un casseur non-polysaccharidique pour casser la viscosité du fluide de traitement dans la zone de traitement.

13. Procédé selon la revendication 1, dans lequel le fluide de traitement est autorisé à se casser dans une zone de traitement du puits avant de dégorger le fluide de la zone de traitement.
